# EUROPÄISCHE PATENTSCHRIFT

(11) **EP 2 154 762 B1**
(45) Veröffentlichungstag und Bekanntmachung des Hinweises auf die Patenterteilung: **12.10.2011**
(21) Anmeldenummer: 09006560.8
(22) Anmeldetag: 15.05.2009
(51) Int. Cl.: H02G 3/22, F16L 5/04

(54) **Kabeldurchführung durch ein Brandschott für Schienenfahrzeuge**
Cable feed through a fireproof bulkhead for rail vehicles
Passage de câble à travers une cloison coupe-feu pour véhicules sur rail

(30) Priorität: 15.08.2008 DE 102008037902
(43) Veröffentlichungstag der Anmeldung: 17.02.2010
(73) Patentinhaber: Voith Patent GmbH, 89522 Heidenheim (DE)
(72) Erfinder: Schäfer, Marco, 24105 Kiel (DE); Hüserich, Heiko, 24814 Sehestedt (DE)
(74) Vertreter: Weitzel, Wolfgang

(56) Entgegenhaltungen:
- DE-U1-202007 018 572

## Beschreibung

Die Erfindung betrifft eine Kabeldurchführung durch ein Brandschott für Schienenfahrzeuge, insbesondere für Lokomotiven.

Wird ein Kabel durch eine Öffnung in einer Wand hindurchgeführt, so muss dafür gesorgt werden, dass sich ein Brand, der auf der einen Seite der Wand entsteht, nicht zur anderen Seite der Wand hin ausbreiten kann. Hierzu dient ein Brandschott. Dieses besteht im Wesentlichen aus einer Intumeszenzmasse, in die das Kabel eingebettet wird. Dieses Material füllt die Zwischenräume zwischen der Wandfläche des Kabels und der Wandöffnung aus. Das Material hat die Eigenschaft, dass es bei Auftreten eines Brandes nicht etwa zerstört wird, sondern expandiert, und damit ein Übergreifen eines Brandes von der einen Seite der Wand zur anderen verhindert oder verzögert.

Das Vorsehen eines Brandschottes ist besonders wichtig bei Schienenfahrzeugen, besonders bei Lokomotiven. Dabei werden auch Kabel durch eine Wand des Führerhauses hindurchgeführt. Die Wand trennt hierbei zwei Räume voneinander: zum einen den Raum außerhalb des Führerhauses, zum anderen den Raum innerhalb des Führerhauses.

Im Raum außerhalb des Führerhauses kann Brand entstehen, zum Beispiel dann, wenn dies der Motorraum ist. Dieser ist grundsätzlich brandgefährdet. Der Innenraum des Führerhauses hingegen ist schutzbedürftig. Er muss abgeschottet werden gegen das Übergreifen von Brand aus dem brandgefährdeten Außenraum. Hierzu bedarf es eines Brandschottes.

Häufig werden mehrere sogenannte Systemkabel oder Einzeladern oder Kombinationen hiervon in einem gemeinsamen Schutzschlauch durch die Wand hindurchgeführt. Der Schutzschlauch kann auch ein sogenanntes Wellrohr sein. Die Erfahrung zeigt, dass ein Brandschott der genannten Art häufig nicht ausreicht. Das Ausbreiten eines Brandes vom brandgefährdeten Gefahrenraum in den zu schützenden Schutzraum wird nicht genügend verzögert. Der Schutz durch das Brandschott ist somit nicht ausreichend.

Der Erfindung liegt die Aufgabe zugrunde, Maßnahmen anzugeben, mit welchen sich die Wirkung eines Brandschottes verbessern lässt, so dass sich ein Brand von einem Gefahrenraum auch nicht mit zeitlicher Verzögerung zu einem Schutzraum ausbreiten kann, jedenfalls nicht innerhalb jener Zeitspanne die durch die geltenden Normen vorgegeben ist.

Diese Aufgabe wird durch die Merkmale von Anspruch 1 gelöst.

Der Erfinder hat Folgendes erkannt:

Entsteht im Gefahrenraum ein Brand, so zerstört er den genannten Schutzschlauch, aber nicht sicher auch auf jenen Längenabschnitten der Kabel, die von Intumeszenzmaterial umgeben sind. In dem Maße, in dem der Schutzschlauch erhalten bleibt, bildet sich ein röhrenförmiger Hohlraum, und der Brand breitet sich vom Gefahrenraum zum Schutzraum aus.

Um dies zu verhindern, wird gemäß der Erfindung der Kabelschutzschlauch sowie gegebenenfalls das zwischen einzelnen Leitern vorhandene Füllmaterial entfernt. Hierdurch werden die nackten Leiter in das Intumeszenzmaterial eingebettet und sind somit von diesem umgeben. Hierdurch wird verhindert, dass sich ein Brand vom Gefahrenraum zum Schutzraum hindurchfressen kann.

Durch die Erfindung wird somit Folgendes erreicht:
- eine dauerhafte Dichtigkeit/Beständigkeit gegen Brand, jedenfalls während jener Zeitspanne, die durch die Normen vorgeschrieben ist
- dadurch, dass der Schutzschlauch oder Mantel im Bereich der Kabeldurchführung nicht vorhanden ist, sind die einzelnen Kabel oder Adern unmittelbar von Intumeszenzmaterial umgeben. Zwischen den einzelnen Kabeln beziehungsweise Adern und dem Intumeszenzmaterial bildet sich somit kein röhrenförmiger Hohlraum, durch den hindurch sich der Brand vom Gefahrenraum zum Schutzraum hin ausbreiten kann.
- Adern und Systemkabel sind normalerweise beschichtet, beispielsweise aus Kunststoff. Auch können sie von einem Gewebe umschlossen sein. Derartige Ummantelungen können an den Kabeln beziehungsweise Adern verbleiben. Sie sind von Intumeszenzmaterial unmittelbar umschlossen.

Die Erfindung ist anhand der Zeichnung näher erläutert. Darin ist im Einzelnen Folgendes dargestellt:
- Figur 1: zeigt in perspektivischer Darstellung eine Kabeldurchführung durch ein Brandschott mit einer Mehrzahl von Kabeln.
- Figur 2: zeigt den Gegenstand von Figur 1, eingebaut in die Wand des Führerhauses einer Lokomotive.
- Figur 3: zeigt die Kabeldurchführung gemäß der Figuren 1 und 2 in eingebautem Zustand, in Draufsicht vom Innenraum des Führerhauses her.
- Figur 4: zeigt die Kabeldurchführung gemäß der Figuren 1 bis 3 in perspektivischer Darstellung im Schnitt, wiederum vom Führerhaus her gesehen.

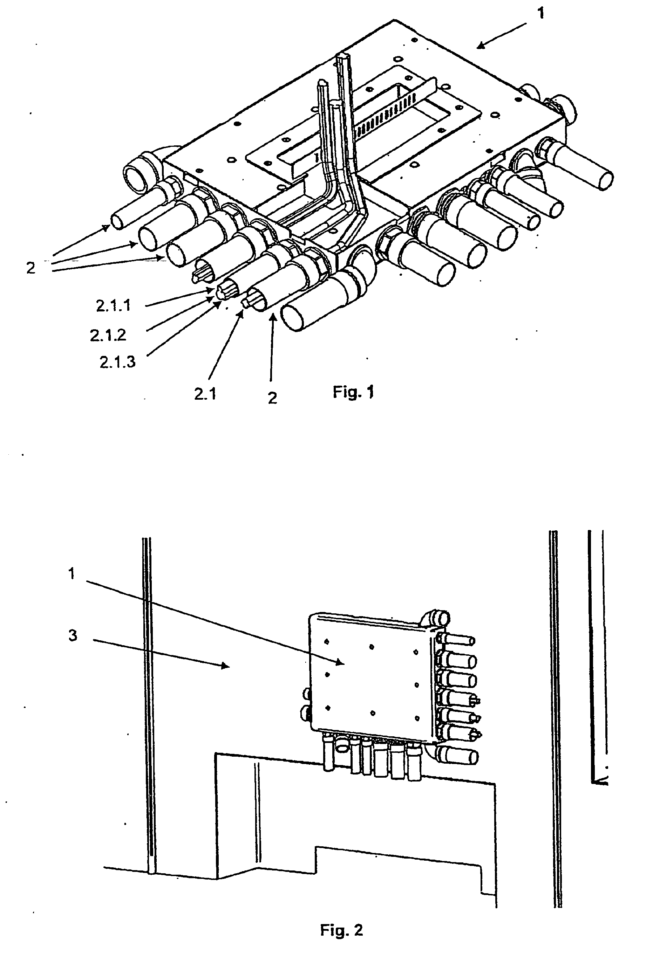

Das in Figur 1 gezeigte Brandschott ist aus einer Box 1 gebildet. Diese ist rechteckig, was aber nicht zwingend ist. Eine Vielzahl von Kabeln 2 ist in den Innenraum der Box 1 auf deren Schmalseite eingeführt, meist parallel zur Breitseite der Box 1. Es soll im Folgenden lediglich Kabel 2.1 betrachtet werden. Dieses ist aus der Box 1 senkrecht zu deren Breitseite herausgeführt.

Kabel 2.1 weist Adern 2.1.1, 2.1.2, 2.1.3 auf, kann aber auch selbst eine Einzelader wie 2.1.1, 2.1.2 oder 2.1.3 sein. Diese dienen dem Leiten elektrischer Energie oder Lichtenergie oder sonstiger Energie. Die Systemkabel oder Adern sind von einem Schutzschlauch 2.2. umgeben. Der Schutzschlauch besteht aus Gummi oder Plastik oder einem anderen Material, das nicht brandresistent ist.

Die Box 1 ist von Intumeszenzmaterial vollständig ausgefüllt. Die Box ist völlig geschlossen. Die Kabel 2 sind auf ihrem Verlauf durch das Innere der Box 2 entmantelt, das heißt, dass der Schutzschlauch 2.2 entfernt ist. Die Adern 2.1.1, 2.1.2 und 2.1.3 laufen somit einzeln durch die Intumeszenzmasse und sind in dieser ohne Belassen eines Zwischenraumes eingebettet

Der Schutzschlauch kann auf dem gesamten Verlauf des einzelnen Kabels durch die Box hindurch entfernt sein. Es kann aber auch eine teilweise Entfernung genügen.

Figur 2 zeigt wiederum die Kabeldurchführung. Sie ist an der Wand 3 montiert. Sie füllt eine Öffnung der Wand 1 aus. Die Figur ist ein Blick auf Wand 3 und Kabeldurchführung von der brandgefährdeten Seite, beispielsweise vom Motorraum aus.

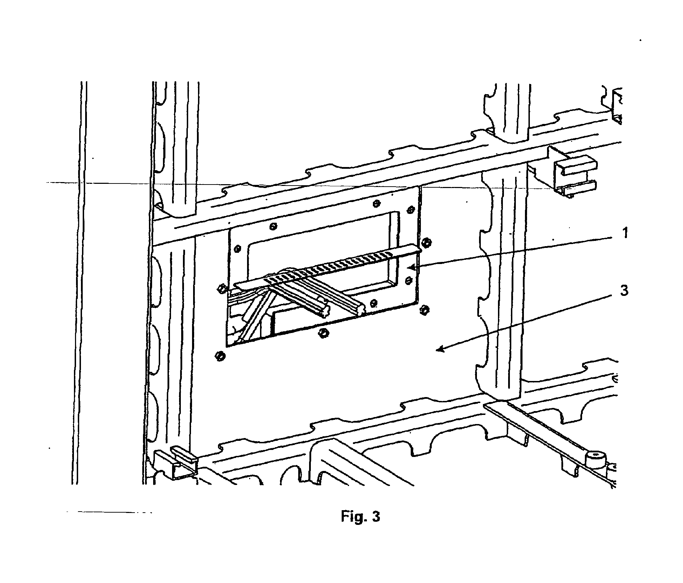

Figur 3 zeigt die Kabeldurchführung, wiederum in eingebautem Zustand, und zwar aus dem Inneren des Führerhauses gesehen.

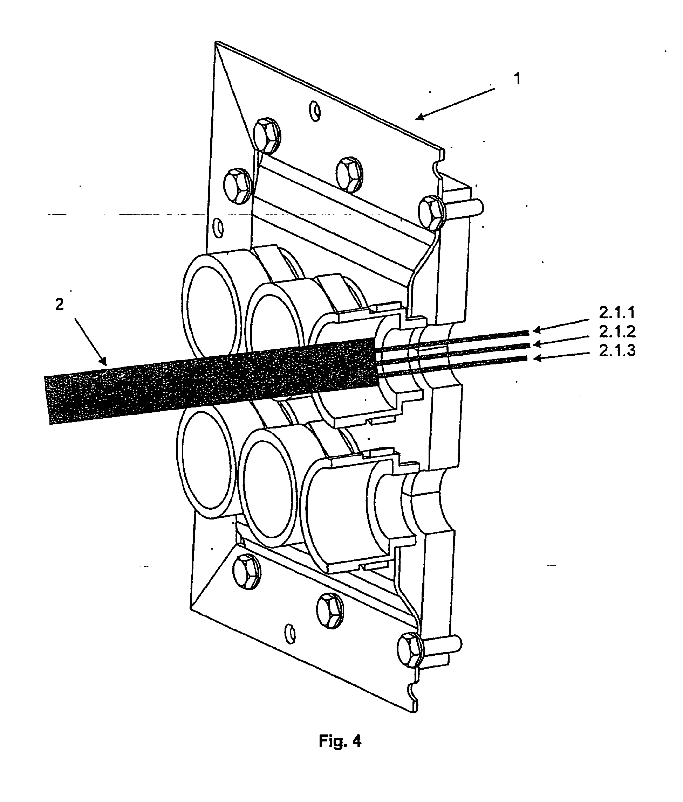

Aus Figur 4 erkennt man eine erfindungsgemäße Kabeldurchführung in weiteren Einzelheiten. Die Box ist aus Stahl hergestellt. Auch andere Materialien kommen in Betracht. Bei dem hier ausgeschnittenen Brandschott erkennt man sechs Kabelschutzschläuche 2, die durch entsprechende kreisrunde Öffnungen hindurchgeführt sind. Die erkennbare Boxfläche ist jene Fläche, die sich auf der brandgefährdeten Schutzraumseite befindet, somit auf der Maschinenraumseite.

Die Kabeldurchführung ist aus Stahlblech hergestellt. Sie weist ein Gehäuse und einen Deckel auf. Der Deckel kann sich auf der Seite des Führerhauses befinden, aber auch auf der gegenüberliegenden Seite.

Die Kabel können so eingeführt werden, wie dargestellt das heißt, sie können der Box 1 von deren Stirnseite oder von einer Längsschmalseite her eingeführt werden. Aber auch andere Einführungsstellen sind möglich.

Es ist auch denkbar, die Kabel wie Folgt zu gestalten: Die Adern werden bereits bei der Herstellung des Kabels mit einer Beschichtung versehen, die die Ader dauerhaft umschließt, und die aus einem Intumeszenzmaterial besteht. Dieses Material sollte natürlich entsprechend elastisch sein, dass es bei einem Biegen des Kabels auf der Ader haften bleibt.

Eine Kabeldurchführung in einem Brandschott gemäß der Erfindung hat sich bei einer Prüfung durch einen unabhängigen Sachverständigen bestens bewährt. Die Prüfung wurde an einer Wand eines Führerhauses einer Lokomotive durchgeführt. Die Prüftemperaturen entsprachen dabei den amtlichen Vorschriften. Das erfindungsgemäße Brandschott hat eine vorschriftsmäßige branddichte Abschottung gezeigt.

Die Ausführung der erfindungsgemäßen Kabeldurchführung erlaubt einen modularen und variablen Aufbau von Kabeldurchführungen, ferner das Nachrüsten bei existierenden Lokomotiven.

### Bezugszeichenliste

- 1: Box
- 2: Kabelschutzschlauch
- 2.1: Kabel
- 2.1.1: Ader
- 2.1.2: Ader
- 2.1.3: Ader
- 2.2: Kabelschutzschlauch
- 3: Wand

## Patentansprüche

1. Wand zum Abtrennen eines brandgefährdeten Gefahrenraumes von einem gegen Brand zu schützenden Schutzraum
mit Kabeln (2) zum Hindurchführen durch Wandöffnungen;
die Kabel (2) umfassen Adern, die elektrische oder Lichtenergie oder eine andere Energie leiten und die mit einem Schutzschlauch versehen sind;
der Raum zwischen den Wandöffnungen und den Kabeln (2) ist mit einer Intumeszenzmasse ausgefüllt;
**gekennzeichnet durch** die folgenden Merkmale:
die Adern (2.1.1, 2.1.2, 2.1.3) oder Systemkabel (2) sind auf ihrem Verlauf durch die Intumeszenzmasse (3) frei von Kabel-Schutzschläuchen.

2. Wand gemäß Anspruch 1, **dadurch gekennzeichnet, dass** der Schutzschlauch der Systemkabel oder der Adern nur auf einem Teil von deren Verlauf durch das Intumeszenzmaterial entfernt ist.

3. Wand nach Anspruch 1 oder 2, **dadurch gekennzeichnet, dass** das Brandschott eine Box (1) umfasst, die in einer Aussparung der Wand (3) einsetzbar ist, die Öffnungen zum Einführen der Kabel (2) oder Adern aufweist.

## Claims

1. A wall for separating a dangerous zone exposed to fire risks from a shelter to be protected against fire, fitted with cables (2) to be run through wall openings; the cables (2) include wires, for conducting electricity, light or another energy and which are provided with a protection hose; the space between the wall openings and the cables (2) is filled with an intumescent mass;
**characterised by** the following features:
the wires (2.1.1,2.1.2,2.1.3) or system cables (2) have no cable protection hoses on their way through the intumescent mass (3).

2. A wall according to claim 1, **characterised in that** the protection hose of the system cable or of the wires is removed on one section only on its way through the intumescent material.

3. A wall according to claim 1 or 2, **characterised in that** the firewall contains a box (1), which can be inserted in a recess of the wall (3), which has openings for the introduction of the cables (2) or wires

## Revendications

1. Paroi de séparation d'un local dangereux exposé aux risques d'incendie, d'un abri devant être protégé contre les incendies, pourvue de câbles (2) à faire passer à travers des ouvertures murales ; les câbles (2) comprenant des fils, assurant la conduction de l'électricité, de la lumière ou d'une autre énergie et étant pourvus d'un tuyau de protection; l'espace compris entre les ouvertures murales et les câbles (2) étant rempli d'une masse intumescente;
présentant les caractéristiques suivantes:
les fils (2.1.1,2.1.2,2.1.3) ou câbles du système (2) ne sont pas revêtus de tuyaux de protection des câbles sur leur trajet à travers la masse intumescente (3).

2. Paroi selon la revendication 1, **caractérisée en ce que** le tuyau de protection des câbles du système ou des fils est retiré sur une partie seulement de leur trajet à travers le matériau intumescent.

3. Paroi selon la revendication 1 ou 2, **caractérisée en ce que** la cloison pare-feu comprend un caisson (1), que l'on peut installer dans un évidement de la paroi (3), et présentant des ouvertures pour l'introduction des câbles (2) ou des fils.
